(19) Europäisches Patentamt
European Patent Office
Office européen des brevets

(11) **EP 3 269 891 A1**

(12) **EUROPÄISCHE PATENTANMELDUNG**

(43) Veröffentlichungstag:
**17.01.2018   Patentblatt 2018/03**

(21) Anmeldenummer: **17181096.3**

(22) Anmeldetag: **13.07.2017**

(51) Int Cl.:
*E04B 2/08* (2006.01)          *E04C 1/41* (2006.01)
*C04B 14/18* (2006.01)          *E04B 2/02* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **14.07.2016   CH 9082016**

(71) Anmelder: **ADT Aero Dämm Technik GmbH**
**79379 Müllheim (DE)**

(72) Erfinder: **Scherer, Josef**
**6440 Brunnen (CH)**

(74) Vertreter: **Felber, Josef**
**Felber & Partner AG**
**Dufourstrasse 116**
**8008 Zürich (CH)**

(54) **MAUERSTEIN SOWIE DARAUS ERSTELLTES MAUERWERK**

(57)   Der Mauerstein (1) weist durchgehende Löcher oder Sacklöcher in seinem Baustoffmaterial auf, welche mit einer Mischung (2) aus geschlossenzelligen Perliten mit einer Druckfestigkeit von wenigstens 0.4 N/mm$^2$ sowie einem Bindemittel verfüllt sind. Diese Verfüllungen (2) sind an den offenen Seiten des Mauersteins glattgestrichen. In einer Variante kann dieser Mauerstein so ausgeführt sein, dass sein Baustoffmaterial selbst einen Anteil von mindestens 10 Volumenprozenten expandierte geschlossenzellige Perlite mit einer Druckfestigkeit wenigstens 0.4 N/mm$^2$ enthält. Als Baustoffmaterial eignet sich Klinker bzw. Ton, Kalksandstein oder Beton. Aus solchen Mauersteinen können Mauerwerke erstellt werden, die mit einem Mörtel verbaut sind, welcher selbst einen Anteil expandierter und geschlossenzelliger Perlite enthält, und die innen und/oder aussen auch mit einem solchen Mörtel verputzt sind.

Fig. 1

EP 3 269 891 A1

**Beschreibung**

Diese Erfindung betrifft einen Mauerstein mit besonders leichtem Gewicht und hohem Wärmedämmwert, sowie ein mit solchen Mauersteinen erstelltes Mauerwerk.

Ein herkömmlicher Mauerstein, in der Praxis auch Backstein oder Maurer- oder Ziegelstein genannt, ist ein aus Kalksandstein, aus Beton oder aus keramischem Material künstlich hergestellter Stein, welcher im Bauwesen zum Mauerwerksbau eingesetzt wird. Der Begriff "Backstein" wird hauptsächlich im süddeutschen und Schweizer Raum gebraucht. Einfache Backsteine aus Lehm können bei nur 900°C gebrannt ("gebacken") werden. Sie sind mechanisch nicht sehr stabil und offenporig, weshalb sie relativ viel Wasser aufnehmen können. Deshalb werden sie üblicherweise verputzt, um die Wetterfestigkeit zu verbessern. Der aus Ton bei höheren Temperaturen gebrannte Tonziegel oder Klinker ist härter und gilt als beständiger. Diese Mauersteine werden mit durchgehenden Hohlräumen bzw. Löchern gebrannt, einerseits zur Gewichtsverminderung und andererseits zur Verminderung der Wärmeleitfähigkeit. Man unterscheidet hierbei zwischen dem Hochlochziegel (HLZ), dessen Lochung senkrecht zur Auflagefläche verläuft und der daher tragend eingesetzt werden kann und dem Langlochziegel (LLZ), dessen Lochung waagerecht zur Auflagefläche verläuft und der daher eine weniger gute Tragfähigkeit besitzt. Zum Erstellen einer tragfähigen Mauer werden die Hochlochziegel mit einem Mörtel mit in der Länge nach versetzten Reihen aufeinander gemauert. Die Löcher bleiben im Wesentlichen frei. Ein solcher Mauerstein ist das Ausgangsmaterial für die Schaffung einer weiterentwickelten Form nach der vorliegenden Erfindung.

Üblicherweise wird auf die Aussenseite einer Fassade eine Dämmplatte in Kombination, meist aus Polystyrol, mit Verputzen mit hohem Dämmwert, ebenfalls meist Polystyrol enthaltend, auf das Mauerwerk aufgebracht, um eine hinreichende Wärmedämmung zu erzielen. Seit Herbst 2016 gilt in Deutschland eine neue Verordnung, wonach Polystyrol auf der Baustelle separat entsorgt werden muss. Polystyrol, welcher in Steinen als Füllstoff liegt oder sich im Dämmputz befindet, kann in der Praxis nur mit viel Aufwand separat entsorgt werden. Als Alternative wurden früher auch Steine mit traditionellem Perlit verfüllt. Perlit ist ein vulkanisches Gestein, welches in Form eines Sandes durch Erhitzung in leichte Kügelchen gebläht wird und gute Wärmedämmeigenschaften aufweist. Diese geblähten Perlite sind jedoch stark hygroskopisch und ziehen entsprechend Wasser an. Sobald sich Wasser im Stein befindet, ist die Dämmwirkung enorm reduziert. Aus brandschutztechnischen Gründen ist Perlit weit besser als Polystyrol, aber die Wasseraufnahme war bisher ein grosser Nachteil. Ein bisher möglicher Weg, die Wärmedämmwerte weiter zu verbessern liegt darin, Back- oder Zementblocksteine mit Steinwolle oder herkömmlichem geblähten Perlit zu verfüllen. Eine Perlit-Verfüllung ist allerdings problematisch infolge der erwähnten hygroskopischen Wirkung des Perlits. Wasser steigt infolge der Saugwirkung in das Mauerwerk auf und lagert sich im Perlit ein. Das Einbringen von Steinwolle in die Löcher der Steine ist andererseits umständlich und aufwendig.

In Anbetracht der Nachteile von herkömmlichen Mauersteinen bzw. Backsteinen, vor allem ihres Gewichtes und ihrer mangelhaften WärmedämmEigenschaften ist es die Aufgabe der vorliegenden Erfindung, einen neuen Mauerstein zu schaffen, welcher erstens wesentlich leichter als herkömmliche Mauersteine ist und der zweitens einen weit besseren Wärmedämmwert bietet, und der dennoch hinreichend druckfest ist, wie das von einem Mauerstein erwartet wird, der erhebliche Lasten aufnehmen muss. Ausserdem soll dieser Mauerstein kostengünstig industriell herstellbar sein. Vielerorts werden gute Wärmedämmungen bei Bauten durch Fördergelder belohnt, in der Schweiz etwa, wenn eine Wand einen Wärmedurchgang U von weniger als 0.20 W/m$^2$K aufweist. Dieser U-Wert wird weiter hinten in dieser Beschreibung noch genau definiert. Die Aufgabe dieser Erfindung ist es schliesslich, mit einem speziell zu schaffenden Mauerstein und mit daraus erstellbaren Mauerwerken diesen U-Wert zu erreichen oder gar zu unterschreiten, was sowohl technisch wie ökologisch und ökonomisch überzeugt und insgesamt viel Sinn macht.

Diese Aufgabe wird gelöst von einem Mauerstein mit durchgehenden Löchern oder Sacklöchern in seinem Baustoffmaterial, zur Erstellung eines Mauerwerkes, wobei diese Löcher mit einer Mischung aus geschlossenzelligen Perliten mit einer Druckfestigkeit von >0.4 N/mm$^2$ sowie einem Bindemittel verfüllt sind, und wobei diese Verfüllungen an den offenen Seiten des Mauersteins weggestrichen sind, sodass sein Wärmedämmwert gegenüber einem unverfüllten Mauerstein gleichen Materials erheblich verbessert ist.

Besonders vorteilhaft ist es, wenn ein solcher Mauerstein mit durchgehenden Löchern oder Sacklöchern in seinem Baustoffmaterial, sei es in seinem Klinker, seinem Kalksandstein oder seinem Beton, einen Anteil von mindestens 10 Volumenprozenten expandierte geschlossenzellige Perlite mit einer Druckfestigkeit >0.4N/mm$^2$ enthält, sodass seine Baustoffmaterial-Dichte gegenüber einem Mauerstein aus reinem Klinker, Kalksandstein oder Beton reduziert ist auf einen Wert zwischen 600kg/m$^3$ und 2'000kg/m$^3$ und sein Wärmedämmwert gegenüber einem unverfüllten oder auch verfüllten Mauerstein aus reinem Klinker, Kalksandstein oder Beton erheblich verbessert ist. Die Herstellung und die Ausführungsvarianten dieses Mauersteins werden im Folgenden beschrieben und seine Vorteile in der Praxis werden erläutert.

Es zeigt:

Figur 1 :    Einen einzelnen Mauerstein, verfüllt mit einem Gemisch von geschlossenzelligem Blähperlit und einem Bindemittel, ausgeschnitten aus einem daraus erstellten Mauerwerk;

Figur 2 :    Ein Mauerwerk aus zwei Lagen von Reihen solcher Mauersteine, mit Innenputz und Aussenputz beschichtet.

Die Erfindung geht von der Erkenntnis aus, dass geblähte Perlite erstens äusserst leicht sind und zweitens hoch wärmedämmend wirken. Es gibt im Stand der Technik und im Markt veredelte, das heisst geblähte Perlite. Rohperlit ist ein chemisch und physikalisch umgewandeltes, vulkanisches Gestein (Obsidian) mit weissem, pudrigen Aussehen. Der rohe Perlit enthält bis 2% Wasser und weist eine Dichte von 900-1'000 kg/m$^3$ auf. Gemäss einem Verfahren mit mehrstufigem Glühen auf Temperaturen von ca. 800°C bis 1'400°C bläht sich Perlit auf das 10-15fache Volumen auf. Die Dichte des Blähproduktes beträgt dann bloss noch 50-300 kg/m$^3$, weist also ein aussergewöhnlich leichtes Gewicht auf. Das Blähen von Perlit ist zwar seit Jahren bekannt. Die bisherige Blähmethode führte aber stets zu offenzelligen, zerrissenen Perliten. Diese weisen eine sehr beschränkte Druckfestigkeit auf und verlieren daher ihre wärmedämmende Wirkung, wenn sie mechanischer Beanspruchung ausgesetzt werden. Sie werden förmlich zerrieben und können daher nur sehr begrenzt und immer nur dort eingesetzt werden, wo eine mechanische Beanspruchung kaum auftritt. Heute aber können Perlite mit einem von der Anmelderin entwickelten mehrstufigen Verfahren industriell in grosser Menge so hergestellt werden, dass sie expandierte, geschlossene, glasierte Hohlkugeln bilden, also expandierte geschlossenzellige, intakte und robuste Perlitkügelchen. Dabei wird der Perlitsand zunächst mittels einer Sieblinie in verschiedene Korngrössen sortiert. Jede einzelne Korngrösse wird anschliessend in einem Rieselkanal mit mehrstufigen Temperaturzonen ansteigender Temperaturen aufgebläht und damit die Oberfläche der Kugeln verglast. Übliche in dieser Weise erzeugte Korngrössen sind:

- 0.1 mm bis 0.5mm

- 0.5mm bis 0.8mm

- 0.8mm bis 1.0mm

- 1.0mm bis 2.0mm

Diese neuartigen, glasierten Kugeln haben eine im Gegensatz zu zerrissenem Perlit sehr geringe Wasseraufnahme-Fähigkeit. Um offenzellige Perlite in Bezug auf die Wasseraufnahmefähigkeit zu verbessern, wurden diese bisher ummantelt, beispielsweise mit Bitumen. Eine andere Variante besteht darin, offenzellige Perlite mit Paraffin zu imprägnieren oder mit Silikon zu veredeln und sie für Schüttungen zu verwenden. Mit dem neuartigen Bläh-Verfahren werden aber expandierte geschlossenzellige Perlite erzeugt, die an ihren Oberflächen verglast sind und daher keine Veredelungs-Massnahmen und auch kein Imprägnieren mehr notwendig machen, da das Produkt kein Wasser aufnimmt. Durch dieses neuartige Bläh-Verfahren lassen sich ausserdem expandierte, geschlossenzellige Perlite herstellen, welche superleicht sind und zudem eine weit bessere Druckfestigkeit als die bisher breit bekannt gewordenen expandierten offenzelligen Perlite aufweisen. Diese geschlossenzelligen Perlite sind zudem so druckfest, dass sie eine Mischung mit Bindemitteln zu einer pastösen Masse erlauben, wobei diese geschlossenzelligen geblähten Perlite sich in der nicht zementösen pastösen Masse als weit robuster gegenüber mechanischer Beanspruchung erweisen als die offenzelligen geblähten Perlite wie sie seit Jahrzehnten bekannt sind. Als Bindemittel eignen sich vorallem nicht-zementöse Bindemittel, wobei aber auch solche auf zementöser Basis konditionierbar sind, wenn dem zementösen Bindemittel geeignete Additive zugegeben werden. Weiter kann auch hydraulischer Kalk oder eine Mischung von zementösen Bindemitteln und hydraulischem Kalk zum Einsatz kommen, wobei die Mischung mit geeigneten Additiven versetzt wird.

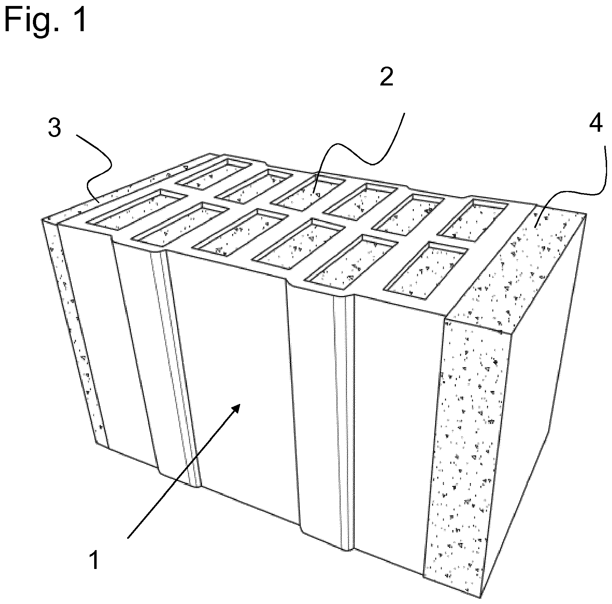

Die einfachste Ausführung des erfindungsgemässen Mauersteins besteht nun darin, seine Löcher oder allenfalls Sacklöcher in seinem Baustoffmaterial, das etwa Klinker bzw. Ton, Kalksandstein oder Beton sein kann, mit einem Gemisch aus expandierten, geschlossenzelligen Perliten und einem Bindemittel zu verfüllen, wie das in Figur 1 anhand eines solchen Mauersteins 1 gezeigt ist, wenn er aus einem erstellen Mauerwerk herausgeschnitten würde, denn dieser Mauerstein 1 ist bereits beidseitig mit Putz beschichtet. Bevorzugt werden für die Perlit-Verfüllung nicht-zementöse Bindemittel eingesetzt, was aber den Einsatz von zementösen Bindemitteln nicht ausschliesst. Diese Löcher sind meistens durchgehend, aber es ist auch eine Ausführung eines Mauersteins denkbar, welcher bloss Sacklöcher aufweist. Diese Löcher oder Sacklöcher werden also industriell mit dieser speziellen pastösen Mischung 2 ausgegossen. Die als Mischkomponente eingesetzten expandierten, geschlossenzelligen Perlite weisen dabei eine Druckfestigkeit von wenigstens 0.4 N/mm$^2$ auf. Die Löcher werden mit dieser Mischung vollständig verfüllt und überschüssiges Mischungsmaterial wird an den offenen Seiten des Mauersteins weggestrichen. Vorzugsweise wird ein elastisch nachgiebiges Rakel eingesetzt, damit die Verfüllungen 2 nach dem Wegstreichen des überflüssigen Materials nicht ganz zur Oberfläche des Mauersteins 1 reichen, sondern gegenüber der Oberfläche leicht nach unten versetzt enden, weil das Rakel dort tiefer greift. Die leicht nach unten abgesetzte Verfüllung 2 führt beim späteren Erstellen des Mauerwerks zu einer besseren Verkrallung bzw. einem stärkeren Verbund mit dem Dünnbettmörtel zwischen den aufeinander gesetzten Mauersteinen.

Der fertig mit der pastösen Mischung 2 verfüllte Mauerstein 1 wird je nach dem spezifischen Füllungsmaterial einer Dampfaushärtung unterzogen oder an der Luft getrocknet oder anderswie behandelt, sodass die Verfüllung 2 aushärtet. In der Figur 1 ist der an einer fertig erstellten Mauer aus solchen Mauersteinen 1 noch aufzubringende Innenputz 3 und Aussenputz 4 gezeigt. Der nackte Mauerstein 1 ab Fabrik stellt sich daher ohne diese beiden Beschichtungen 3,4 dar.

Mauersteine werden bereits heute mit Poren angereichert, damit der Lambda Wert des Baustoffmaterials selbst verbessert wird. Dem Klinker zum Beispiel wird hierzu Styropor oder Holzmehl beigegeben. Beim Brennen des Mauersteins bei ca. 1'000° Celsius verflüchtigen sich die organischen Bestandteile Styropor oder Holz, und die Poren verbleiben im Mauerstein bzw. in diesem Fall im Mauerziegel. Anstelle von solchen organischen Bestandteilen können in einer besonderen Ausführung des vorliegenden Mauersteins expandierte, geschlossenzellige Perlite direkt der Klinkermischung zugeschlagen werden. Diese halten die Brenntemperatur aus und verbleiben somit im gebrannten Mauerstein oder Mauerziegel. Somit wird der Lambda-Wert des Mauerstein-Materials selbst verbessert. Durch dieses Beimischen von expandierten, geschlossenzelligen Perliten wird ein solcher Mauerstein noch leichter und die Maurerarbeit mit derartigen Mauersteinen wird entscheidend erleichtert. Im Einzelnen wird dem Klinker bzw. Ton noch vor der Formung zu einem Mauerstein ein Anteil von mindestens 10 Volumenprozenten expandierte geschlossenzellige Perlite mit einer Druckfestigkeit wenigstens 0.4 N/mm$^2$ beigegeben. Dann werden die Mauersteine geformt, getrocknet und dann gebrannt. Jetzt hat man einen Mauerstein, der wie ein herkömmlicher geformt ist, jedoch wesentlich leichter ist, bei vergleichbarem Lastaufnahmevermögen. Die Dichte lässt sich je nach dem Anteil der zugeschlagenen Perlite auf bis zu 600kg/m$^3$ senken. Auch nur schon eine Reduktion auf deutlich unter 2'000kg/m$^3$ erbringt in der Praxis grosse Vorteile. Das Handling der Mauersteine wird einfacher, die Maurerarbeiten werden wesentlich erleichtert, die Druckfestigkeit bleibt nahezu erhalten und der Wärmedämmwert wird entscheidend verbessert. Es können zudem die Löcher oder Sacklöcher im Mauerstein mit der besagten Mischung verfüllt werden und die verfüllten Mauersteine bzw. die Füllungen werden je nach Füllungsmaterial an der Luft getrocknet, allenfalls erwärmt, mittels Dampf ausgehärtet oder durch Mikrowellenbestrahlung oder anderer Verfahren zur Aushärtung gebracht. Im Fall von Mauerziegeln aus Klinker können die Verfüllungen 2 zusammen mit dem Klinker gebrannt werden. Als Bindemittel eignet sich ein nicht-zementöses Bindemittel, vorzugsweise Wasserglas, das heisst aus einer Schmelze erstarrte, glasartige, amorphe wasserlösliche Natrium-, Kalium- und Lithiumsilicate, die als wässrige Lösung zugeschlagen werden, und die nach Trocknung irreversibel in wasserunlösliche Kieselsäure übergeht. Als alternative nicht-zementöse Bindemittel eignen sich Geopolymere, also anorganische Polymere, aber auch biologische bzw. organische oder auch synthetische Polymere, gegebenenfalls mit geeigneten Additiven, oder eine Mischung aus einigen oder allen dieser Varianten, also auch in Kombination mit Wasserglas. Unter Umständen sind auch zementöse Bindemittel einsetzbar. Diese Komponenten oder ein Gemisch davon werden im Herstellungsprozess in die offenen Stellen der Mauersteine bzw. Backsteine als pastöse Masse eingegossen und eingerüttelt oder einvibriert. Durch leichtes Anpressen wird die gesamte Verfüllung der offenen Bereiche im Mauerstein gewährleistet. Danach wird die Restmenge des Gemisches an der Oberfläche abgestrichen. Dank der Verfüllung mit einer solchen Mischung wird der Lambda-Wert des Mauersteins, welcher dessen Wärmedämmung angibt, massgeblich verbessert.

Als Baustoffmaterial zur Herstellung von Mauersteinen eignet sich auch Kalksandstein. In diesem Fall wird mit einem Zuschlag expandierter geschlossenzelliger Perlite gearbeitet, sodass das Endprodukt in Bezug auf das gesamte Volumen zu 5% bis 50% aus expandierten geschlossenzelligen Perliten besteht, welche somit teilweise den Sand des Kalksandsteins ersetzen. Das Gemisch mit seinem Kalkgehalt wird zusammen mit hydraulischem Kalkmörtel, d.h. mit Wasserkalkmörtel durch Dampfaushärtung zu Kalziumsilikathydrat und somit zu einem Kalkstandsein ausgehärtet, der dann die Perlite einschliesst. Auch auf der Grundlage von Beton als Baustoffmaterial lassen sich solche mit Perliten angereicherte Mauersteine herstellen. In diesem Fall wird der Mauerstein aus einem Gemisch aus Beton mit einem Zuschlag von expandierten geschlossenzelligen Perliten hergestellt, sodass der Perlit-Anteil in Bezug auf das gesamte Volumen am Schluss 5% bis 50% ausmacht. Das Gemisch wird luftgetrocknet zu einem Betonblockstein ausgehärtet.

Grundsätzlich lässt sich der Anteil von expandierten geschlossenzelligen Perliten bei jedem Mauerstein-Typ variieren, sei der grundlegende Baustoff also Klinker (Ton), Kalksandstein oder Beton. Je grösser der Anteil von Perlit ist, umso leichter wird der Mauerstein, im Grenzfall wiegt er dann bloss noch 600 kg/m$^3$. Aber schon jegliche deutliche Gewichtsreduktion im Vergleich zu einem Mauerstein ohne einen solchen Perlit-Zuschlag bedeutet eine wesentliche Verbesserung für die Praxis. Schliesslich wird gleichzeitig auch der Wärmedämmwert deutlich bis sehr erheblich verbessert. Je grösser der Perlitanteil ist, umso besser ist der Wärmedämmwert und in der Regel umso geringer fällt die Druckfestigkeit aus. Entsprechend können für jeden Bedarfsfall Mauersteine mit idealen Eigenschaften angeboten werden. Ausserdem kann die Korngrösse der expandierten geschlossenzelligen Perlite variiert werden, oder es kann ein Gemisch aus verschiedenen Korngrössen eingesetzt werden, zum Beispiel wie solche Korngrössen weiter oben angegeben sind. Grundsätzlich gilt: Je kleiner die Korngrössen, umso höher ist das spezifische Gewicht der Perlite und umso grösser ist ihre Druckfestigkeit.

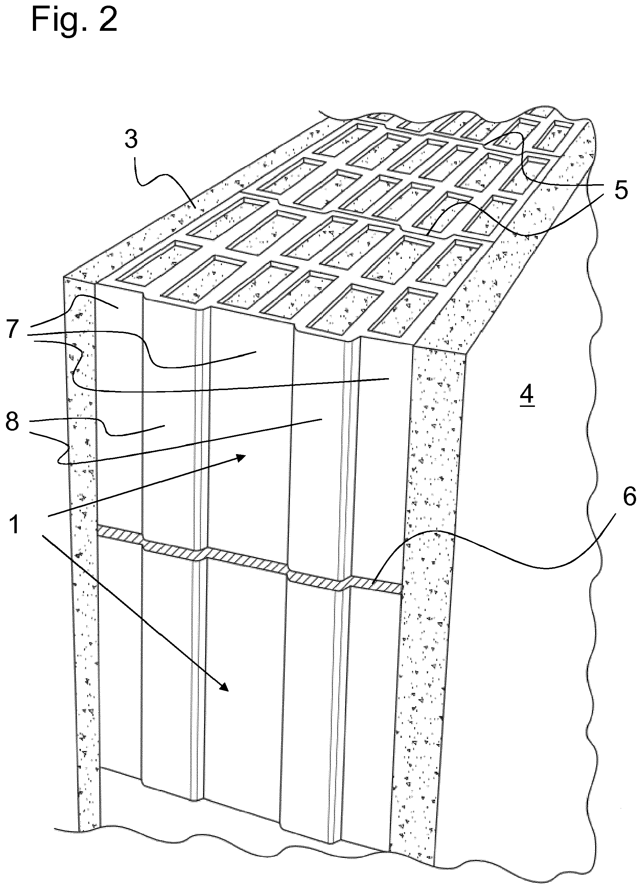

Bei einem Mauerwerk aus solchermassen verfüllten Mauersteinen oder aus mit Perliten angereicherten Mauersteinen wird der Lambda-Wert im Bereich der Steine zwar verbessert, aber die horizontalen und vertikalen Fugen, welche mit einem traditionellen Mörtel ausgeführt werden, weisen immer noch einen viel ungünstigeren Lambda-Wert als die verbauten Mauersteine auf. Aus diesem Grund macht es Sinn, den Mauermörtel ebenfalls mit expandierten, geschlossenzelligen Perliten zu vergüten. Und schliesslich können auch die Innen- und Aussenverputze als Dämmputze mit expandierten, geschlossenzelligen Perliten als Sandersatz angereichert werden. Dadurch entsteht ein Mauerwerk wie in Figur 2 gezeigt, zum Beispiel eine Aussenwand mit Innenputz 3 und Aussenputz 4, mit einem sehr geringen Wärmedurchgang, ohne dass separate Dämmplatten auf der Aussenseite appliziert werden müssen. Es werden Reihen von Mauersteinen 1 fugenlos Stoss 5 an Stoss 5 aneinandergefügt. Die Mauersteine sind an ihren aneinander zu stossenden Seiten so geformt, dass sie dort Vertiefungen 7 und Erhöhungen 8 aufweisen. Beim Zusammenfügen auf Stoss greifen diese Vertiefungen 7 und Erhöhungen 8 satt inander und somit wird eine grosse Passgenauigkeit und damit eine genaue gerade Reihe der Mauersteine 1 erzeugt. Dann wird eine Dünnbett-Mörtelschicht 5 von ca. 5mm Dicke oben auf die Reihe aufgetragen und die nächste Reihe von Mauersteinen 1 wird darauf auf Stoss gefügt aufgelegt. Am Schluss wird der Innenputz 3 und der Aussenputz 4 auf das erstellte Mauerwerk aufgetragen.

Beim Herstellen eines solchen neuartigen Mauerwerkes und damit erstellten Bauwerkes können alle bekannten Bauregeln erfüllt werden. Die Mauerkrone wird in der Praxis durch den Maurer bei Arbeitsunterbrüchen gegen ein Eindringen von Wasser infolge Regen oder Schneefall abgedeckt. Es besteht nun die Möglichkeit, die verfüllten Mauersteine bereits im Werk an der Oberfläche, das heisst an der Kontaktfläche zum horizontalen Mauermörtel, zu imprägnieren oder zu hydrophobieren. Auf bauseitige Abdeckmassnahmen kann dann während der späteren Maurerarbeit verzichtet werden.

Im Folgenden werden noch einige Werte angegeben, die im Zusammenhang mit solchen Mauersteinen und daraus erstellen Mauern ermittelt wurden. Ein Backstein mit Durchgängen oder Sacklöchern, die nicht verfüllt sind, weist einen Lambda-Wert von ca. 0.44 W/mK auf. Wird ein Mauerwerk aus solchen Backsteinen mit geschlossenzelligem Blähperlit-Mörtel verfugt, so stellt sich je nach Qualität dieses Mörtels ein Lambda-Wert von 0.060 - 0.080 W/mK ein. Dabei gilt: Je geringer die Schüttdichte und je reiner der Perlit-Mörtel, umso besser fällt der Lambda-Wert aus. Ein traditioneller Verputz ohne Leichtzuschlag erbringt einen Lambda-Wert von ca. 0.70 - 0.90 W/mK. Ein Dämmputz mit Leichtzuschlägen erzielt einen wesentlich tieferen Lambda-Wert auf, zum Beispiel ein Dämmputz mit Leichtzuschlag in Form von expandiertem Polystyrol (EPS) kann schon Lambda-Werte von ca. 0.05.- 0.08 W/mK erbringen, und ein Dämmputz mit geschlossenzelligen geblähten Perliten einen Lambda-Wert ca. 0.050- 0.065 W/mK. Der Lambda-Wert eines solchen Dämmputzes mit einer Schüttdichte von 90g/l liegt bei ca. 0.045 W/mK, bei einer Schüttdichte von 75g/l bei ca. 0.040 W/mK und bei einer Schüttdichte von 60g/l noch ca. 0.035 W/mK. Basierend auf dem Lambda-Wert der verschiedenen jeweiligen Schichtdicken im Wandaufbau lässt sich ein theoretischer U-Wert als Mass für die Wärmedämmung der gesamten Wand errechnen.

Der Wärmedurchgangskoeffizient U ist wie folgt definiert:

$$U = \frac{1}{\frac{1}{h_i} + \frac{d_1}{\lambda_1} + \frac{d_2}{\lambda_2} + \ldots + R_g + \ldots + \frac{d_n}{\lambda_n} + \frac{1}{h_e}} \ W/(m^2 \cdot K)$$

wobei

$d_1 \ldots d_n$    die Dicke des jeweiligen Baumaterials in m im ganzen Wandaufbau bedeutet,
$h_i$, $h_e$    den Wärmeübergangskoeffizient in $W/m^2K$ bezeichnet,
$\lambda_1 \ldots \lambda_n$    den Wärmeübergangskoeffizient in W/mK der jeweiligen Baumaterialien des ganzen Wandaufbaus bedeutet,
$R_g$    den Wärmedurchlasswiderstand von Luftschichten im Wandaufbau bedeutet.

Die Berechnungen zeigen, dass mit dem Wandaufbau von 2 cm Innenputz mit geschlossenzelligen Perliten, 30 cm Backstein, der mit geschlossenzelligen Perliten verfüllt ist, und 5 cm Aussenputz mit geschlossenzelligen Perliten ein U-Wert von bloss noch 0.18 $W/m^2K$ erreicht wird. Den Nachweis dieses U-Wertes gilt es an einer grossen Prüfwand zu bestätigen. Die Ergebnisse der Prüfwand stimmen normalerweise mit den theoretischen Rechenwerten aus folgendem Grund nicht überein: Die Wand besteht nämlich auch aus Vertikal- und Horizontalfugen zwischen den Steinen. Beim schlechten Ausbau dieser Fugen kann Wärme austreten und der gemessene U-Wert wird darum schlechter. Aus diesem Grund werden für die Vertikalfugen spezielle Ziegelsteine verwendet, welche fugenlos gestossen werden. Die Steine greifen ineinander. Für die Horizontalfuge wird ein spezieller Dünnbettmörtel verwendet, welcher idealerweise ebenfalls mit geschlossenzelligem Perlit verfüllt wird.

**Patentansprüche**

1. Mauerstein (1) mit durchgehenden Löchern oder Sacklöchern in seinem Baustoffmaterial, zur Erstellung eines Mauerwerkes, wobei diese Löcher mit einer Mischung (2) aus geschlossenzelligen Perliten mit einer Druckfestigkeit von wenigstens 0.4 N/mm$^2$ sowie einem Bindemittel verfüllt sind, und wobei diese Verfüllungen an den offenen Seiten des Mauersteins (1) weggestrichen sind, sodass sein Wärmedämmwert gegenüber einem unverfüllten Mauerstein gleichen Materials erheblich verbessert ist.

2. Mauerstein (1) mit durchgehenden Löchern oder Sacklöchern in seinem Baustoffmaterial nach Anspruch 1, **dadurch gekennzeichnet, dass** sein Baustoffmaterial, das heisst sein Klinker, Kalksandstein oder Beton einen Anteil von mindestens 10 Volumenprozenten expandierte geschlossenzellige Perlite mit einer Druckfestigkeit wenigstens 0.4N/mm$^2$ enthält, sodass seine Dichte gegenüber einem Mauerstein aus reinem Klinker, Kalksandstein oder Beton reduziert ist auf einen Wert zwischen 600kg/m$^3$ und 2'000kg/m$^3$ und sein Wärmedämmwert gegenüber einem verfüllten Mauerstein aus reinem Klinker, Kalksandstein oder Beton erheblich verbessert ist.

3. Mauerstein (1) mit durchgehenden Löchern oder Sacklöchern in seinem Baustoffmaterial nach einem der vorangehenden Ansprüche, **dadurch gekennzeichnet, dass** er aus einem Gemisch aus Klinker und expandierten geschlossenzelligen Perliten mit einem Anteil von 5% bis 50% am Gesamtvolumen besteht und das Gemisch zu einem Ziegelstein gebrannt ist.

4. Mauerstein (1) mit durchgehenden Löchern oder Sacklöchern in seinem Baustoffmaterial nach einem der Ansprüche 1 bis 2, **dadurch gekennzeichnet, dass** er aus einem Gemisch aus Kalksandstein und expandierten geschlossenzelligen Perliten mit einem Anteil von 5% bis 50% am Gesamtvolumen besteht, indem diese Perlite im Mauerstein (1) den Sand im Kalksandstein mit diesen Anteilen ersetzen und das Gemisch mit seinem Kalkgehalt durch Dampfaushärtung zu Kalziumsilikathydrat und somit zu einem Kalkstandsein ausgehärtet ist.

5. Mauerstein (1) mit durchgehenden Löchern oder Sacklöchern in seinem Baustoffmaterial nach einem der Ansprüche 1 bis 2, **dadurch gekennzeichnet, dass** er aus einem Gemisch aus Beton oder Beton mit Luftporen einerseits und expandierten geschlossenzelligen Perliten mit einem Anteil von 5% bis 50% am Gesamtvolumen andererseits besteht, indem diese Perlite im Mauerstein (1) den Sand im Beton mit diesen Anteilen ersetzen und das Gemisch zusammen mit einem zementösen Bindemittel luftgetrocknet zu einem Betonblockstein ausgehärtet ist.

6. Mauerstein (1) mit durchgehenden Löchern oder Sacklöchern in seinem Baustoffmaterial nach einem der vorangehenden Ansprüche, **dadurch gekennzeichnet, dass** die Verfüllungen (2) der Löcher oder Sacklöcher aus expandierten geschlossenzelligen Perliten mittels einer Imprägnierung mit einem Bindemittel verfestigt sind.

7. Mauerstein (1) mit durchgehenden Löchern oder Sacklöchern in seinem Baustoffmaterial nach einem der vorangehenden Ansprüche, **dadurch gekennzeichnet, dass** die Mischungskomponente des Bindemittels aus einem nichtzementösen Bindemittel aus Geopolymeren, d.h. anorganischen Polymeren, oder biologischen bzw. organischen oder synthetischen Polymeren besteht.

8. Mauerstein (1) mit durchgehenden Löchern oder Sacklöchern in seinem Baustoffmaterial nach einem der Ansprüche 1 bis 6, **dadurch gekennzeichnet, dass** die Mischungskomponente des Bindungsmittels aus einem nicht-zementösen Bindemittel aus Wasserglas besteht.

9. Mauerstein (1) mit durchgehenden Löchern oder Sacklöchern in seinem Baustoffmaterial nach einem der Ansprüche 1 bis 6, **dadurch gekennzeichnet, dass** die Mischungskomponente des Bindemittels aus einem nicht-zementösen Bindemittel aus einem Gemisch aus Wasserglas in Kombination mit Geopolymeren d.h. anorganischen Polymeren, biologischen bzw. organischen oder synthetischen Polymeren besteht.

10. Mauerstein (1) mit durchgehenden Löchern oder Sacklöchern in seinem Baustoffmaterial nach einem der Ansprüche 1 bis 9, **dadurch gekennzeichnet, dass** dem Bindemittel je nach Bindemittelart geeignete Additive zugeschlagen sind.

11. Mauerstein (1) mit durchgehenden Löchern oder Sacklöchern in seinem Baustoffmaterial nach einem der Ansprüche 1 bis 6, **dadurch gekennzeichnet, dass** das Bindemittel ein zementöses Bindemittel mit geeigneten Additiven ist, oder ein hydraulischer Kalk oder eine Mischung dieser beiden Bindemittel mit Additiven.

12. Mauerstein (1) mit durchgehenden Löchern oder Sacklöchern in seinem Baustoffmaterial nach einem der Ansprüche 1 bis 11, **dadurch gekennzeichnet, dass** die beigemengten expandierten geschlossenzelligen Perlite eine Dichte von zwischen 50 und 300 kg/m$^3$ aufweisen und an den auf Stoss fugenlos aneinander zu fügenden Seiten des Mauersteins (1) Vertiefungen (7) und Erhöhungen (8) ausgeformt sind.

13. Mauerwerk, erstellt aus Mauersteinen (1) nach einem der vorangehenden Ansprüche, **dadurch gekennzeichnet, dass** die einzelnen Mauersteine (1) miteinander fugenlos auf Stoss in Reihen verbaut sind und durch Einsatz eines Mörtels zwischen den einzelnen Lagen der Mauersteine (1), der zu seiner Vergütung eine Komponente expandierter geschlossenzelliger Perlite als Sandersatz enthält.

14. Mauerwerk nach Anspruch 13, **dadurch gekennzeichnet, dass** es mit einem Innen- (3) und/oder Aussenputz (4) auf Basis eines Verputzmaterials mit einer Komponente expandierter, geschlossenzelliger Perlite ausgerüstet ist.

15. Mauerwerk nach Anspruch 13, **dadurch gekennzeichnet, dass** es mit einem Innen- (3) und/oder Aussenputz (4) auf Basis eines Verputzmaterials mit einer Komponente expandierter, geschlossenzelliger Perlite ausgerüstet ist, und der Wandaufbau von innen nach aussen zunächst einen Innenputz (3) mit geschlossenzelligen Perliten von wenigstens 2 cm aufweist, dann einen Mauerstein (1), der mit geschlossenzelligen Perliten verfüllt ist und wenigstens 30 cm breit ist, gefolgt von einem Aussenputz (4) mit geschlossenzelligen Perliten von wenigstens 5 cm Schichtdicke, womit ein rechnerischer U-Wert von weniger als 0.25 W/m$^2$K erreichbar ist.

Fig. 1

Fig. 2

Europäisches Patentamt
European Patent Office
Office européen des brevets

# EUROPÄISCHER RECHERCHENBERICHT

Nummer der Anmeldung

EP 17 18 1096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 2 899 174 A2 (ADT AERO DÄMM TECHNIK GMBH [DE]) 29. Juli 2015 (2015-07-29)<br>* Absätze [0001], [0016], [0019] - [0022]; Anspruch 4; Abbildungen 2-3 *<br>----- | 1,3,4,6,<br>8,11<br>2,5,7-15 | INV.<br>E04B2/08<br>E04C1/41<br>C04B14/18<br>E04B2/02 |
| Y<br>A | CH 709 866 A2 (ADT AERO DÄMM TECHNIK GMBH [DE]) 15. Januar 2016 (2016-01-15)<br>* Absätze [0020] - [0021]; Anspruch 1 *<br>----- | 2,5,<br>13-15<br>1 | |
| Y<br>A | WO 2015/056139 A2 (ADT AERO DAEMM TECH GMBH) 23. April 2015 (2015-04-23)<br>* Absätze [0001], [0014], [0028] - [0009]; Anspruch 4 *<br>----- | 2,5,7,<br>10,12<br>1 | |
| Y<br>A | CH 710 162 A2 (ADT AERO DÄMM TECHNIK GMBH [DE]) 31. März 2016 (2016-03-31)<br>* Absätze [0018] - [0021] *<br>----- | 7-9,11<br>1 | |
| Y | EP 0 093 417 A2 (DAHM PAUL BIMSBAUSTOFF [DE]) 9. November 1983 (1983-11-09)<br>* Seite 7, Zeile 22 - Seite 8, Zeile 11; Abbildungen 8, 9 *<br>----- | 12-15 | **RECHERCHIERTE SACHGEBIETE (IPC)**<br><br>E04B<br>E04C<br>C04B |

Der vorliegende Recherchenbericht wurde für alle Patentansprüche erstellt

| Recherchenort | Abschlußdatum der Recherche | Prüfer |
|---|---|---|
| München | 23. Oktober 2017 | Vratsanou, Violandi |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 18 1096

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2017

| Im Recherchenbericht angeführtes Patentdokument | Datum der Veröffentlichung | Mitglied(er) der Patentfamilie | Datum der Veröffentlichung |
|---|---|---|---|
| EP 2899174 A2 | 29-07-2015 | CH 709130 A2<br>EP 2899174 A2 | 15-07-2015<br>29-07-2015 |
| CH 709866 A2 | 15-01-2016 | KEINE | |
| WO 2015056139 A2 | 23-04-2015 | EP 3057918 A2<br>US 2016244375 A1<br>WO 2015056139 A2 | 24-08-2016<br>25-08-2016<br>23-04-2015 |
| CH 710162 A2 | 31-03-2016 | KEINE | |
| EP 0093417 A2 | 09-11-1983 | DE 3216080 A1<br>EP 0093417 A2 | 03-11-1983<br>09-11-1983 |

EPO FORM P0461

Für nähere Einzelheiten zu diesem Anhang : siehe Amtsblatt des Europäischen Patentamts, Nr.12/82